# EUROPÄISCHE PATENTSCHRIFT

(11) **EP 0 930 515 B1**
(45) Veröffentlichungstag und Bekanntmachung des Hinweises auf die Patenterteilung: **15.03.2006**
(21) Anmeldenummer: 99100064.7
(22) Anmeldetag: 05.01.1999
(51) Int. Cl.: G01S 13/89

(54) **Verfahren zur Abstandsmessung und Konturerfassung mittels Mikrowellen**
Method for distance measurement and contour sensing using microwaves
Procédé de mesure de distance et de détection de contours utilisant des micro-ondes

(30) Priorität: 16.01.1998 DE 19801511
(43) Veröffentlichungstag der Anmeldung: 21.07.1999
(73) Patentinhaber: WIELAND-WERKE AG, 89070 Ulm (DE)
(72) Erfinder: Otto, Johanngeorg, Prof. Dr.-Ing., 73457 Essingen (DE); Lust, Marcus, 73431 Aalen (DE); Müller, Hilmar R., Dr.-Ing., 89287 Bellenberg (DE); Hansmann, Stephan, Dr.-Ing, 89073 Ulm (DE); Stock, Dieter Dr.-Ing., 88489 Wain (DE)

(56) Entgegenhaltungen:
- WO-A-94/16339
- DE-A- 3 246 084
- US-A- 5 315 306

## Beschreibung

Die Erfindung betrifft ein Verfahren zur Erfassung der Kontur eines Objekts, nach dem Oberbegriff des Anspruchs 1 bzw. 2.

Das an sich bekannte FM-CW-Prinzip ("**f**requency **m**odulated **c**ontinuous **w**ave") oder das Pulsprinzip sind beispielsweise von Merril Skolnik in "Introduction to Radar Systems", McGraw-Hill, (1980), S.68 ff., ausführlich beschrieben.

Abstandsmessungen der genannten Art werden bisher beispielsweise bei der Höhenmessung von Flugzeugen über große Entfernungen (Flugzeugradar/DE-PS 3.830.992) und im sogenannten Nahbereich (0 bis ca 30 m) als Füllstandsmessungen in Prozeßbehältern und Lagertanks durchgeführt (DE-AS 2.129.290; WO 92/14.124).

Diesen Anwendungen ist gemeinsam, daß punktförmige Abstandsmessungen zwischen der für das Verfahren charakteristischen Sende- und Empfangseinheit und einem im Durchmesser gegenüber der Sende- und Empfangsantenne sehr viel kleineren sogenannten Meßfleck auf der Oberfläche des Objektes, zu dem die Entfernung gemessen werden soll, nicht möglich sind. Das FM-CW-Prinzip wurde noch nicht auf Anwendungen übertragen, bei denen ein vergleichsweise kleiner Meßfleck erforderlich ist, um beispielsweise Abstandsmessungen zu einzelnen Konturpunkten einer nicht ebenen Objektoberfläche durchzuführen.

Die Druckschrift DE 32 46 084 betrifft ein Mikrowellen-Echoverfahren zur Abbildung eines Objektes im Nahbereich, bei dem ein Mikrowellenstrahl auf einem Punkt im Zielraum fokussiert wird. Dieser Punkt wird in einer Ebene im Zielraum bewegt, die reflektierten Echosignale im Scannerverfahren ausgewertet und ein Bild des Zieles erzeugt. Die Abtastung des Zielraumes erfolgt mittels einer Schwenkbewegung der Antenne. Dies zur Raumüberwachung einsetzbare Verfahren führt allerdings nur zu einer zweidimensionalen Abbildung der Umgebung.

Der Erfindung liegt die Aufgabe zugrunde, die bisherigen Verfahren der Abstandsmessung im Nahbereich dahingehend weiterzubilden, daß sie zur Erfassung der Kontur erstens mit hinreichender Meßgenauigkeit auch an solchen Objekten vorgenommen werden können, die sich in einer staub- und nebelhaltigen Atmosphäre befinden, und zweitens Abstandsmessungen zu einzelnen Objektpunkten möglich sind, deren Größe sehr viel kleiner ist als die des Objektes selbst.

Die Aufgabe wird erfindungsgemäß durch die Merkmale der Ansprüche 1 und 2 gelöst. Die weiteren Ansprüche geben vorteilhafte Aus- und Weiterbildungen der Erfindung wieder.

Die Erfindung schließt die technische Lehre ein, daß Mikrowellen im Frequenzbereich von 1 bis 100 GHz verwendet werden und dass die Mikrowellen unter Ausbildung eines Messflecks (Fokus) mit einem Durchmesser von etwa D = 10 bis 30 mm auf die Oberfläche des Objektes fokussiert werden.

Die Wahl des Frequenzbereichs trägt dem Umstand Rechnung, daß das Durchdringungsvermögen der Mikrowellen durch Nebel oder Staubpartikel wesentlich durch das Verhältnis von Partikelgröße zu Wellenlänge der Strahlung bestimmt ist.

Der für die Abstandsmessungen an einzelnen Objektpunkten erforderliche kleine Meßfleckdurchmesser wird durch die Fokussierung der Mikrowellen erreicht.

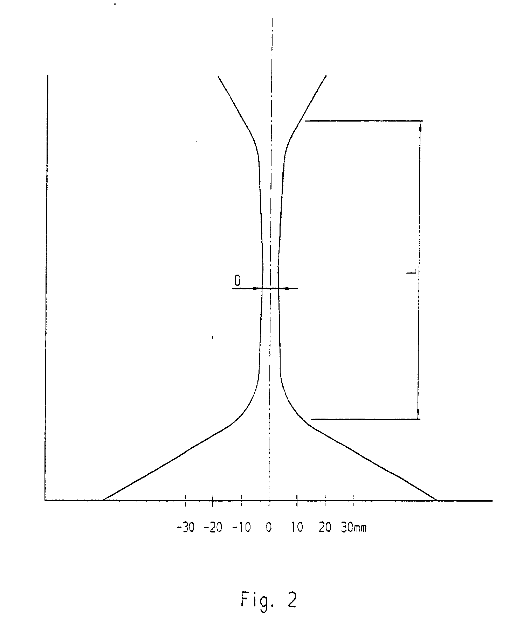

Die Fokussierung der Mikrowellen erfolgt dabei nicht auf einen "idealisierten" Brennpunkt, sondern auf einen größeren Bereich fokussierten Feldes (Meßfleck), dessen Durchmesser D das Minimum eines in der Strahlachse liegenden Fokusschlauchs darstellt (vgl. Fig. 2). Dort sind schematisch die 3-dB-Linien der Feldintensität als Funktion des Abstands von der Zentralachse eingetragen. Die Fokuslänge L entspricht dabei der Länge des Strahlengangabschnittes, in dem sich der größte Teil der Strahlungsleistung in einem eng um die Strahlenachse angeordneten Raum konzentriert und somit der Abstand der 3-dB-Linien geringfügig größer ist als D.

Aus der Antennenapertur und der Abstrahlungscharakteristik beispielsweise einer Hornantenne ergeben sich bei der Mikrowellen-Abstandsmessung nach dem Stand der Technik divergierende Strahlenbündel, deren Durchmesser mindestens der Antennenapertur entspricht. Damit sind Meßfleckdurchmesser im gewünschten Bereich von 30 bis 10 mm oder kleiner nicht realisierbar.

Die Fokussierung der Mikrowellen zum Zwecke der Abstandsmessung ist nach dem Stand der Technik nicht sinnvoll, weil sich für die einzelnen Teilstrahlen unterschiedliche Weglängen zum Fokus ergeben. Die Überlagerung der verschiedenen Teilstrahlen führt zu Interferenzen, die eine Entfernungsauswertung stark verfälschen. Dennoch ist es möglich, mit fokussierten Strahlen Entfernungen genau zu messen, wenn man nur kleine Meßflecke bzw. konvexe Targets und nur einen dem idealen Fokus benachbarten Entfernungsbereich zur Messung zuläßt.

Bevorzugte Bereiche für die Frequenz der Mikrowellen sind 75 bis 95 GHz und für den Durchmesser des Meßflecks D = 10 bis 20 mm.

Nach einer besonderen Ausführungsfarm der Erfindung werden die Mikrowellen mittels einer Ellipsoid- oder Parabolantenne fokussiert, wobei insbesondere die Mikrowellen im ersten Brennpunkt der Ellipsoidantenne eingespeist und im zweiten Brennpunkt der Ellipsoidantenne fokussiert werden.
Ellipsoide haben die Eigenschaft, daß (bei Betrachtung mit geometrischer Optik) von einem Brennpunkt ausgehende Strahlen in den anderen Brennpunkt fokussiert werden, wobei die Weglänge für alle Strahlen die gleiche ist.

Da die Fokussierung der Mikrowellen auf die Objektoberfläche bereits den Abstand zwischen Sendeeinheit und Objektoberfläche festlegt, wird durch geeignete Wahl einer Antennenapertur gewährleistet, daß eine noch ausreichende Fokussierung bei gewissen Abstandsveränderungen vorliegt, die mindestens so groß sind, wie die tatsächlich zu erwartenden Abstandsschwankungen zum Objekt.

Über die Wahl des Meßfleckdurchmessers und der eingesetzten Mikrowellenfrequenz wird eine ausreichende Auflösung der Kontur erzielt.

Für geeignet dimensionierte Ellipsoid-Antennen ergeben sich bei verschiedenen Aperturen im Bereich von 100 bis 400 mm 3-dB-Breiten des Mikrowellenstrahls kleiner 30 mm innerhalb von Fokuslängen L von 300 bis 1000 mm. Der Fehlereinfluß unterschiedlicher Weglängen zwischen Sendeeinheit und Meßfleck liegt bei einer Apertur von 400 mm bei etwa 0,1 mm, wenn man den Meßbereich auf die Länge L des Fokusschlauchs begrenzt.

Das erfindungsgemäße Verfahren kann nicht nur zur Abstandsmessung, sondern auch zur Erfassung der Kontur eines Objekts herangezogen werden, indem der Meßfleck ausgelenkt wird. Die Auslenkung erfolgt vorzugsweise mittels eines schwenkbaren oder rotierenden Spiegels mit reflektierender Oberfläche (metallischer Spiegel oder Spiegel mit metallisierter Oberfläche). Nach einer erfindungsgemäßen Variante wird die Kontur durch mehrere Mikrowellensignale abgetastet, die einzelnen, voneinander beabstandeten Sende- und Empfangseinheiten zugeordnet sind.
Ein bevorzugtes Einsatzgebiet des erfindungsgemäßen Verfahrens ist das Sprühkompaktieren, um den Durchmesser des dort herzustellenden Bolzens möglichst konstant zu halten. Das Sprühkompaktierverfahren selbst wird beispielsweise in dem Aufsatz: "The Osprey Preform Process" von R. W. Evans et al. in "Powder Metallurgy", Vol. 28 (1985), No.1, S. 13 bis 20, ausführlich beschrieben.

Gegenstand der Erfindung ist weiterhin eine Vorrichtung zur Durchführung des erfindungsgemäßen Verfahrens zur Abstandsmessung.
Die Vorrichtung ist dadurch gekennzeichnet, daß sie aus einer an sich bekannten Sende- und Empfangseinheit für Mikrowellen und einer Ellipsoidantenne besteht, wobei die Einspeisung für die Mikrowellen im ersten Brennpunkt der Ellipsoidantenne angeordnet und der zweite Brennpunkt der Oberfläche des zu untersuchenden Objekts zugeordnet ist.

Die Apertur der Ellipsoidantenne beträgt vorzugsweise 100 bis 400 mm.
Die Auslenkung des Mikrowellenstrahls erfolgt insbesondere dadurch, daß in der Mitte zwischen der Einspeisung der Mikrowellen und der Oberfläche des Objekts ein Drehspiegel mit reflektierender Oberfläche angeordnet ist.

Die Erfindung wird an Hand des folgenden Ausführungsbeispiels näher erläutert. Es zeigt
Fig. 1 die Anwendung des erfindungsgemäßen Verfahrens auf den Sprühkompaktierprozeß und
Fig. 2 als Detail F nach Fig. 1 die Fokussierung des Mikrowellenstrahls.

Beim Sprühkompaktierprozeß kommen optische Verfahren nur bei (selten vorhandenen) guten Sichtverhältnissen in Frage. Das erfindungsgemäße Verfahren dient dazu, auch bei ungünstigen Sichtverhältnissen in der Sprühkammer (Overspray, Zinkdämpfe ...) die sich einstellende Kontur des gesprühten Bolzens überwachen zu können. Die Kenntnis über die Bolzenkontur während des Sprühprozesses ist für die Einstellung der Prozeßparameter unbedingt erforderlich.

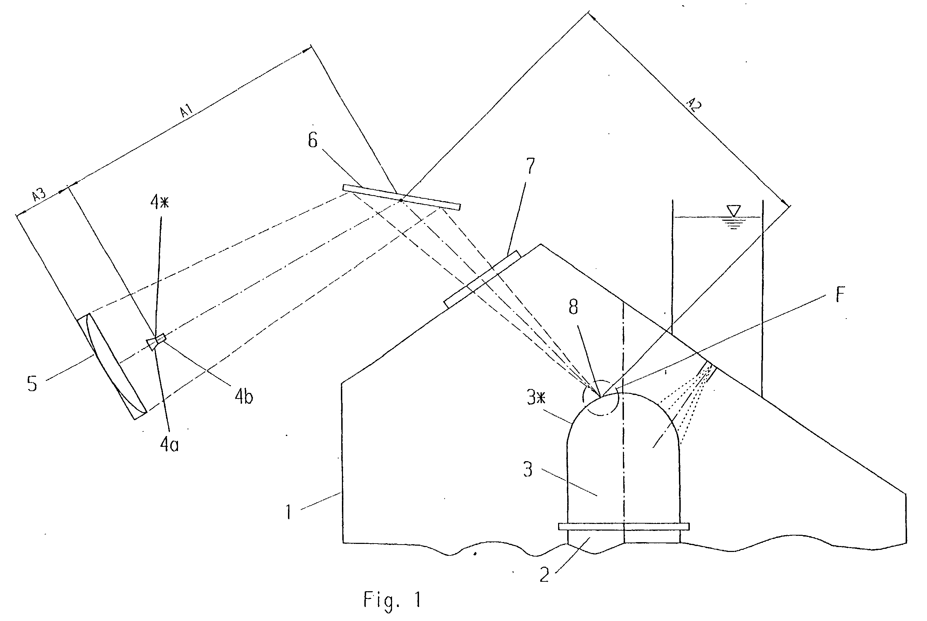

Die Fig. 1 zeigt schematisch einen Vertikalschnitt durch eine Sprühkammer 1 und die zugeordnete Meßvorrichtung. In der Sprühkammer 1 entsteht auf einem Drehteller 2 ein Bolzen 3 mit einem Durchmesser von etwa 300 bis 400 mm.

Die Meßvorrichtung besteht aus einer kommerziellen (an sich bekannten) Sende- und Empfangseinheit 4a/4b für Mikrowellen und einer Ellipsoidantenne 5. Es wurde eine Frequenz von 94 GHz gewählt (Wellenlänge λ = 3,2 mm). Mit einer Größe der Metallpartikel im Bereich von etwa 50 *µ*m ergibt sich damit ein günstiges Verhältnis von Partikelgröße zu Wellenlänge.

Die Einspeisung 4* der Sendeeinheit 4a wurde im ersten Brennpunkt der Ellipsoidantenne 5 angeordnet (Apertur: 250 mm). Die Mikrowellen werden an einem metallischen Drehspiegel 6 reflektiert, gelangen durch ein für Mikrowellen durchlässiges Fenster 7 und werden im zweiten Brennpunkt der Ellipsoidantenne 5 auf der Bolzenoberfläche 3* fokussiert. Der Abstand der Brennpunkte zum Drehspiegel 6 betrug jeweils A₁ = A₂ = 700 mm. Der Abstand der Einspeisung 4* zum Scheitelpunkt der Antenne 5: A₃ = 100 mm. Es wurde ein Meßfleck 8 mit einem Durchmesser D = 25 mm erreicht. Die Auslenkung des Meßflecks 8 im Bereich einiger 10 mm erfolgte über den Drehspiegel 6.

Die Auswertung der Mikrowellensignale und die weitere Datenverarbeitung zur Regelung des Bolzendurchmessers sind nicht Gegenstand der Erfindung.

Bei Verwendung eines metallischen Drehspiegels 6 kann der reflektierte Mikrowellenstrahl bei 90°-Stellung des Spiegels 6 zur Zentralachse auf die Empfangseinheit 4b gerichtet werden, deren Position bekannt ist. Damit kann die Genauigkeit der Mikrowellen-Abstandsmessung jederzeit geprüft und kalibriert werden. Da FM-CW-Sensoren bei Temperaturveränderungen oder durch Alterung ihre Kennlinie verändern können, ist eine derartige Korrekturmöglichkeit sinnvoll und notwendig.

## Patentansprüche

1. Verfahren zur Erfassung der Kontur eines Objekts (3), bei dem ausgegangen wird von einem Verfahren zur berührungslosen Messung des Abstandes zwischen einer Sende- und Empfangseinheit (4a/4b) für Mikrowellen und dem zu untersuchenden Objekt (3) nach dem FM-CW- oder dem Puls-Radarprinzip, wobei das abgestrahlte Mikrowellensignal von dem zu untersuchenden Objekt (3) reflektiert wird und das resultierende Mischsignal ein Maß für den Abstand darstellt,
mit folgenden kennzeichnenden Merkmalen:
a) es werden Mikrowellen im Frequenzbereich von 10 bis 100 GHz verwendet,
b) die Mikrowellen werden mittels einer Parabol- oder Ellipsoidantenne (5) unter Ausbildung eines Meßflecks (8) auf die Oberfläche (3*) des Objekts (3) fokussiert,
c) die Messung der Kontur erfolgt innerhalb eines Fokusschlauchs der Länge L = 300 bis 1000 mm und des Durchmessers D = 10 bis 30 mm,
d) der Meßfleck (8) wird dazu mittels eines schwenkbaren oder rotierenden Spiegels (6) mit reflektierender Oberfläche beidseitig ausgelenkt.

2. Verfahren zur Erfassung der Kontur eines Objekts (3), bei dem ausgegangen wird von einem Verfahren zur berührungslosen Messung des Abstandes zwischen mehreren Sende- und Empfangseinheit (4a/4b) für elektromagnetische Wellen (Mikrowellen) und dem zu untersuchenden Objekt (3) nach dem FM-CW- oder dem Puls-Radarprinzip, wobei das abgestrahlte Mikrowellensignal von dem zu untersuchenden Objekt (3) reflektiert wird und das resultierende Mischsignal ein Maß für den Abstand darstellt,
mit folgenden kennzeichnenden Merkmalen:
a) es werden Mikrowellen im Frequenzbereich von 10 bis 100 GHz verwendet,
b) die Mikrowellen werden mittels einer Parabol- oder Ellipsoidantenne (5) unter Ausbildung eines Meßflecks (8) auf die Oberfläche (3*) des Objekts (3) fokussiert,
c) die Messung der Kontur erfolgt innerhalb eines Fokusschlauchs der Länge L = 300 bis 1000 mm und des Durchmessers D = 10 bis 30 mm,
d) die Kontur durch mehrere Mikrowellensignale abgetastet wird, die einzelnen, voneinander beabstandeten Sende- und Empfangseinheiten (4a/4b) zugeordnet sind.

3. Verfahren nach einem der Ansprüche 1 oder 2, mit einem nach dem Sprühkompaktierverfahren herzustellenden Bolzen als zu untersuchendem Objekt (3).

4. Verfahren nach einem der Ansprüche 1 bis 3, **dadurch gekennzeichnet, daß** der Frequenzbereich der Mikrowellen 75 bis 95 GHz beträgt.

5. Verfahren nach einem der Ansprüche 1 bis 4, **dadurch gekennzeichnet, daß** der Durchmesser des Meßflecks (8) D = 10 bis 20 mm beträgt.

6. Vorrichtung zur Durchführung des Verfahrens nach einem der Ansprüche 1 bis 5, **dadurch gekennzeichnet,**
**daß** sie aus zumindest einer an sich bekannten Sende- und Empfangseinheit (4a/4b) für Mikrowellen und einer Ellipsoidantenne (5) besteht, wobei die Einspeisung (4*) für die Mikrowellen im ersten Brennpunkt der Ellipsoidantenne (5) angeordnet und der zweite Brennpunkt der Oberfläche (3*) des zu untersuchenden Objekts (3) zugeordnet ist.

7. Vorrichtung nach Anspruch 6, **dadurch gekennzeichnet,**
**daß** die Apertur der Ellipsoidantenne (5) 100 bis 400 mm beträgt.

8. Vorrichtung nach Anspruch 6 oder 7 zur Durchführung des Verfahrens nach Anspruch 1, **dadurch gekennzeichnet,**
**daß** in der Mitte zwischen der Einspeisung (4*) der Mikrowellen und der Oberfläche (3*) des Objekts (3) ein Drehspiegel (6) mit reflektierender Oberfläche angeordnet ist.

9. Vorrichtung nach einem der Ansprüche 6 bis 8, **dadurch gekennzeichnet,**
**daß** das Meßsystem einen bekannten, nicht veränderlichen Meßabstand zur Selbstkalibration und/oder Selbstüberwachung der Funktionstüchtigkeit des Meßsystems aufweist.

10. Vorrichtung nach Anspruch 9, **dadurch gekennzeichnet,**
**daß** als nicht veränderlicher Meßabstand der Abstand A₁ zwischen dem Spiegel (6) bei 90°-Stellung zur Zentralachse und der im ersten Brennpunkt der Ellipsoidantenne (5) angeordneten Sende- und Empfangseinheit (4a/4b) auswählbar ist.

## Claims

1. A method for determining the contour of an object (3), in which the starting point is a method for the contactless measurement of the distance between a transmitting and receiving unit (4a/4b) for microwaves and the object (3) to be examined in accordance with the FM-CW principle or pulsed radar principle, wherein the radiated microwave signal is reflected by the object (3) to be examined and the resulting mixed signal is a measure of the distance, having the following characterising features:
a) microwaves in the frequency range from 10 to 100 GHz are used,
b) the microwaves are focussed by means of a parabolic or ellipsoidal antenna (5) to form a measuring spot (8) on the surface (3*) of the object (3),
c) measurement of the contour is effected within a focussing tube of length L = 300 to 1000 mm and diameter D =10 to 30 mm,
d) the measurement spot (8) is deflected for that purpose by means of a swivellable or rotating mirror (6) having a reflective surface on both sides.

2. A method for determining the contour of an object (3), in which the starting point is a method for the contactless measurement of the distance between a plurality of transmitting and receiving units (4a/4b) for electromagnetic waves (microwaves) and the object (3) to be examined in accordance with the FM-CW principle or pulsed radar principle, wherein the radiated microwave signal is reflected by the object (3) to be examined and the resulting mixed signal is a measure of the distance, having the following characterising features:
a) microwaves in the frequency range from 10 to 100 GHz are used,
b) the microwaves are focussed by means of a parabolic or ellipsoidal antenna (5) to form a measuring spot (8) on the surface (3*) of the object (3),
c) measurement of the contour is effected within a focussing tube of length L = 300 to 1000 mm and diameter D =10 to 30 mm,
d) the contour is scanned by a plurality of microwave signals, which are associated with individual, spaced transmitting and receiving units (4a/4b).

3. A method according to one of claims 1 and 2, with a bolt to be produced by the spray-forming method as the object (3) to be examined.

4. A method according to any one of claims 1 to 3, **characterised in that** the frequency range of the microwaves is from 75 to 95 GHz.

5. A method according to any one of claims 1 to 4, **characterised in that** the diameter of the measuring spot (8) D = 10 to 20 mm.

6. A device for carrying out the method according to any one of claims 1 to 5, **characterised in that** it comprises at least one microwave transmitting and receiving unit (4a/4b) known per se and an ellipsoidal antenna (5), the feed-in point (4*) for the microwaves being positioned at the first focal point of the ellipsoidal antenna (5) and the second focal point being associated with the surface (3*) of the object (3) to be examined.

7. A device according to claim 6, **characterised in that** the aperture of the ellipsoidal antenna (5) is from 100 to 400 mm.

8. A device according to claim 6 or 7 for carrying out the method according to claim 1, **characterised in that** a rotating mirror (6) having a reflecting surface is arranged in the middle between the feed-in point (4*) of the microwaves and the surface (3*) of the object (3).

9. A device according to any one of claims 6 to 8, **characterised in that** the measuring system comprises a known, invariable test distance for self-calibration and/or self-monitoring of the functional efficiency of the measuring system.

10. A device according to claim 9, **characterised in that** the distance A₁ between the mirror (6) when set at 90° to the central axis and the transmitting and receiving unit (4a/4b) arranged at the first focal point of the ellipsoidal antenna (5) is selectable as invariable test distance.

## Revendications

1. Procédé pour détecter le contour d'un objet (3), selon lequel on part d'un procédé pour la mesure sans contact de la distance entre une unité d'émission et de réception (4a/4b) pour micro-ondes et l'objet à examiner (3) selon le principe du radar FM-CW ou du radar à impulsions, le signal de micro-ondes émis étant réfléchi par l'objet à examiner (3) et le signal mixte résultant représentant une mesure de la distance,
présentant les éléments caractéristiques suivants :
e) on utilise des micro-ondes dans la gamme de fréquences de 10 à 100 GHz,
f) on focalise les micro-ondes au moyen d'une antenne parabolique ou ellipsoïdale (5) moyennant la formation d'un spot de mesure (8) sur la surface (3*) de l'objet (3),
g) la mesure du contour s'effectue à l'intérieur d'un tube de focalisation ayant pour longueur L = 300 à 1000 mm et pour diamètre D = 10 à 30 mm,
h) le spot de mesure (8) est dévié à cet effet des deux côtés à l'aide d'un miroir pivotant ou rotatif (6) comportant une surface réfléchissante.

2. Procédé pour détecter le contour d'un objet (3), selon lequel on part d'un procédé pour la mesure sans contact de la distance entre plusieurs unités d'émission et de réception (4a/4b) pour ondes électromagnétiques (micro-ondes) et l'objet à examiner (3) selon le principe du radar FM-CW ou du radar à impulsions, le signal d'ondes électromagnétiques (micro-ondes) émis étant réfléchi par l'objet à examiner (3) et le signal mixte résultant représentant une mesure de la distance,
présentant les éléments caractéristiques suivants :
e) on utilise des micro-ondes dans la gamme de fréquences de 10 à 100 GHz,
f) on focalise les micro-ondes au moyen d'une antenne parabolique ou ellipsoïdale (5) moyennant la formation d'un spot de mesure (8) sur la surface (3*) de l'objet (3),
g) la mesure du contour s'effectue à l'intérieur d'un tube de focalisation ayant pour longueur L = 300 à 1000 mm et pour diamètre D = 10 à 30 mm,
h) le contour est exploré par plusieurs signaux à micro-ondes, qui sont associés à des unités individuelles d'émission et de réception (4a/4b) distantes l'une de l'autre.

3. Procédé selon l'une des revendications 1 ou 2, comportant un goujon devant être fabriqué au moyen du procédé de compactage à pulvérisation, en tant qu'objet à examiner (3).

4. Procédé selon l'une des revendications 1 à 3, **caractérisé en ce que** la gamme des fréquences des micro-ondes va de 75 à 95 GHz.

5. Procédé selon l'une des revendications 1 à 4, **caractérisé en ce que** le diamètre du spot de mesure (8) est D = 10 à 20 mm.

6. Dispositif pour la mise en oeuvre du procédé selon l'une des revendications 1 à 5, **caractérisé en ce qu'**il est constitué par au moins une unité d'émission et de réception (4a/4b) connue en soi pour des micro-ondes et une antenne ellipsoïdale (5), l'alimentation (4*) pour les micro-ondes étant disposée au niveau du premier foyer de l'antenne ellipsoïdale (5) et le second foyer (3*) est associé à la surface de l'objet à examiner (3).

7. Dispositif selon la revendication 6, **caractérisé en ce que** l'ouverture de l'antenne ellipsoïdale (5) s'étend de 100 à 400 mm.

8. Dispositif selon la revendication 6 ou 7 pour la mise en oeuvre du procédé selon la revendication 6, **caractérisé en ce**
**qu'**un miroir rotatif (6) possédant une surface réfléchissante est disposé au centre entre l'alimentation (4*) et la surface (3*) de l'objet (3).

9. Dispositif selon l'une des revendications 6 à 8, **caractérisé en ce que** le système présente une distance de mesure connue non variable, pour l'auto-calibrage et/ou l'auto-contrôle de l'aptitude au fonctionnement du système de mesure.

10. Dispositif selon la revendication 9, **caractérisé en ce**
**que** comme distance de mesure non variable, on peut choisir la distance A₁ entre le miroir (6) dans une position à 90° par rapport à l'axe central et l'unité d'émission et de réception (4a/4b) disposée au premier foyer de l'antenne ellipsoïdale (5).
